Europäisches Patentamt

European Patent Office

Office européen des brevets

(11) Publication number: **0 218 404**
**A2**

# (12) EUROPEAN PATENT APPLICATION

(21) Application number: **86307261.7**

(51) Int. Cl.⁴: **F 16 D 55/14**

(22) Date of filing: **22.09.86**

(30) Priority: **28.09.85 GB 8523949**

(43) Date of publication of application: **15.04.87**
**Bulletin 87/16**

(84) Designated Contracting States: **DE FR GB IT**

(71) Applicant: **LUCAS INDUSTRIES public limited company, Great King Street, Birmingham, B19 2XF West Midlands (GB)**

(72) Inventor: **Campbell, Roy The Corner House, 1 Marlbrook Lane Licky Rock, Bromsgrove Worcestershire (GB)**
Inventor: **Price, Anthony George, 14 Meadow Lane Croesyceiliog, Cwmbran Gwent NP44 2EY Wales (GB)**

(74) Representative: **Spall, Christopher John et al, BARKER, BRETTELL & DUNCAN 138 Hagley Road, Edgbaston Birmingham B16 9PW (GB)**

(54) **Improvements in self-energising disc brakes.**

(57) In a self-energising disc brake balls (6, 7, 8, 9, 10, 11) are each disposed between a pair of ramp surfaces (14, 15) in a pair of pressure plates (1, 2), and the ramp surfaces of each pair converge downwardly with respect to the normal vertical axis (20) of the brake. The effect of gravity acting on the balls tends to enhance the co-operation of balls with their respective ramps.

IMPROVEMENTS IN SELF-ENERGISING DISC BRAKES

This invention relates to self-energising disc brakes of the kind in which rotatable friction discs provided with linings of friction material are adapted to be brought into engagement with spaced opposed radial surfaces in a housing by pressure plates located between the friction discs and centred by stationary pilot lugs, balls are located in co-operating oppositely inclined angularly spaced recesses in the adjacent faces of the pressure plates, and the application of the brake is initiated by moving the pressure plates angularly in opposite directions, the pressure plates then moving apart by a tendency for the balls to ride up ramps defined by the edges of the recesses, so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate provides a servo action.

Self-energising brakes of the kind set forth may be dry or they may be of the liquid cooled type, and such brakes are commonly used in tractors and like vehicles and are hereinafter called brakes of the kind set forth.

In brakes of the kind set forth it is desirable that all the balls should be active during brake actuation. This will then optimise the ramp lengths of the recesses, and improve the work sharing of the mechanism comprising the co-operation of the balls with the ramps of the recesses. Ideally all the balls should make good rolling contact with the ramps of each respective pair.

According to our invention in a brake of the kind set forth the ramps of each pair of recesses converge in a generally downwards direction with respect to the attitude of the brake when installed in its normal position in a vehicle.

Thus we take advantage of the effect of gravity acting on the balls, and the effect of gravity tends to enhance the co-operation of each ball with the ramps with which it is associated.

This enables the effective lengths of the ramps and the quality of the balls to be reduced.

When balls are disposed in pairs of recesses located on opposite sides of the vertical centre line of the brake when installed in a vehicle, the pairs of recesses on opposite sides of the centre line are oppositely arranged to ensure that gravity acts on each ball in a direction to enhance the co-operation of each ball with its respective pair of ramps.

One embodiment of our invention is illustrated in the accompanying drawings in which:-

Figure 1 is an end view of a portion of a spreading disc brake;

Figure 2 is a section on the line 2-2 of Figure 1; and

Figure 3 is a section on the line 3-3 of Figure 1.

The brake illustrated in the drawings is of a spreading type in which rotatable friction discs provided on opposite sides with lining of friction material are adapted to be brought into engagement with spaced opposed radial surfaces in a housing by pressure plates 1, 2 located between the discs and centred by three angularly spaced stationary pilots 3, 4, 5. Balls 6, 7, 8, 9, 10 and 11 are each located in a pair of co-operating oppositely inclined recesses 12 and 13 in the adjacent faces of the pressure plates 1, 2, and the balls 6 to 8 and 9 to 11 are disposed on opposite sides of the vertical centre line 20 of the brake.

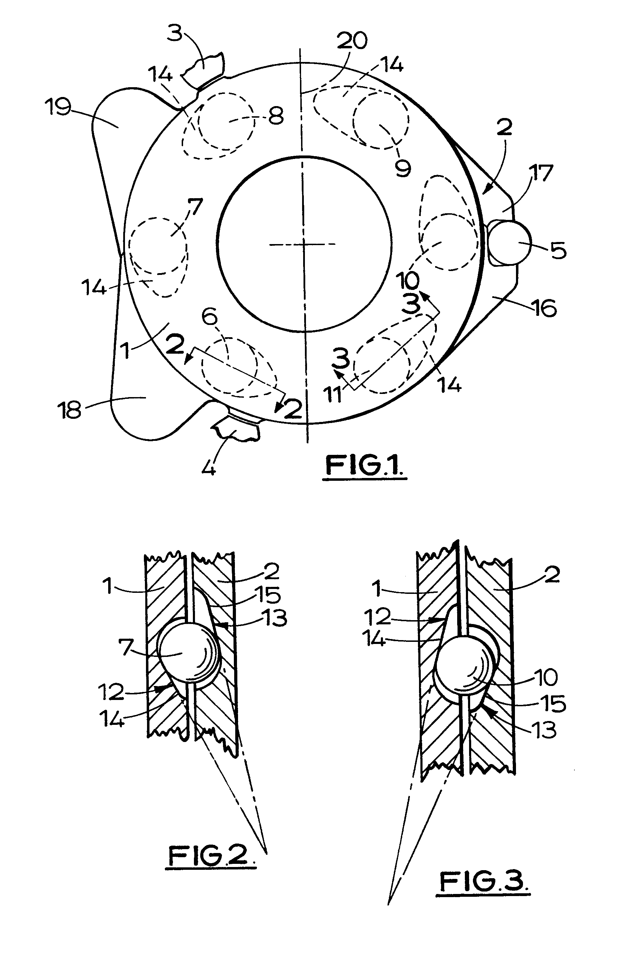

Ramp surfaces 14, 15 comprising the edges of the recesses 12 and 13 of each respective pair and between which the respective balls co-operate converge in a generally downwards direction of which the major component is in a vertical sense. This ensures that the effect of gravity acts in a direction to enhance the co-operation of each ball with the ramp surfaces of the recesses in which it is received. It will be noted that the recesses in which the balls 6, 7 and 8 are received are oppositely arranged with respect to those in which the balls 9, 10 and 11 are received. This ensures that any loose ball can be urged by gravity into its ideal position. Specifically the ramp surfaces 14 in the recesses 12 to the left of the vertical centre line as viewed in Figure 1 of the drawings are shorter in length than the corresponding ramp surfaces 15, and the ramp surfaces 15 to the right of the vertical centre line are shorter in length than the corresponding ramp surfaces 14.

The application of the brake is initiated by moving the pressure plates 1, 2 angularly in opposite directions which causes the pressure plates 1, 2 to move axially relatively away from each other due to the tendency for the balls to ride up the ramps. This urges the friction discs into engagement with the faces in the housing. The pressure plates 1, 2 are then carried round with the discs until one is arrested by the engagement of a lug 16, 17 on a respective plate with a drag-taking abutment comprising the lug 5, whereafter continued angular movement of the other plate provides a servo action.

The brake is applied mechanically for parking or in an emergency by a pull-rod (not shown) which extends through a radial opening in the housing and is coupled to the outer ends of a pair of toggle links of which the inner ends are pivotally connected to lugs 18, 19 on the respective pressure plates 1, 2.

5

## CLAIMS

1. A self-energising disc brake comprising rotatable friction discs provided with linings of friction material adapted to be brought into engagement with spaced opposed radial surfaces in a housing by pressure plates (1, 2) located between the friction discs and centred by stationary pilot lugs, balls (6, 7, 8, 9, 10, 11) located in co-operating oppositely inclined angularly spaced recesses (12, 13) in the adjacent faces of the pressure plates, and the application of the brake being initiated by moving the pressure plates angularly in opposite directions, the pressure plates then moving apart by a tendency for the balls to ride up ramps (14, 15) defined by the edges of the recesses, so that the pressure plates move into engagement with the friction discs which are urged into engagement with the radial surfaces, the pressure plates being carried round with the friction discs until one is arrested by the engagement of a lug (16, 17) on the plate with a drag-taking stop abutment (5) in the housing, and the continued angular movement of the other pressure plate provides a servo action, characterised in that the ramps (14, 15) of each pair of recesses (12, 13) converge in a generally downwards direction with respect to the attitude of the brake when installed in its normal position in a vehicle.

2. A brake according to claim 1, characterised in that pairs of recesses (12, 13) are located on opposite sides of the vertical centre line (20) of the brake when installed in a vehicle and the pairs of recesses on opposite sides of the centre line are oppositely arranged.

3. A brake according to claim 1 or claim 2, characterised in that the ramps (14) in one plate on one side of the vertical centre line (20) are shorter than the corresponding ramps (13) in the other plate, and the ramps (14) in the said one plate on the opposite side of the vertical centre line are longer than the corresponding ramps (13) in the said other plate.

FIG.1.

FIG.2.

FIG.3.